# EUROPÄISCHE PATENTSCHRIFT

(11) **EP 2 651 703 B1**
(45) Veröffentlichungstag und Bekanntmachung des Hinweises auf die Patenterteilung: **27.01.2016**
(21) Anmeldenummer: 11782437.5
(22) Anmeldetag: 16.11.2011
(51) Int. Cl.: B60S 1/04, B60S 1/58

(54) **SCHEIBENWISCHVORRICHTUNG FÜR EIN KRAFTFAHRZEUG**
WINDSCREEN WIPER DEVICE FOR A MOTOR VEHICLE
DISPOSITIF D'ESSUIE-GLACE POUR UN VÉHICULE AUTOMOBILE

(30) Priorität: 15.12.2010 DE 102010063143
(43) Veröffentlichungstag der Anmeldung: 23.10.2013
(73) Patentinhaber: Robert Bosch GmbH, 70442 Stuttgart (DE)
(72) Erfinder: ALBRECHT, Gerard, F-67690 Hatten (FR); STERNS, Orlando, 76228 Karlsruhe (DE); REITH, Michael, 77815 Buehl-Vimbuch (DE)
(86) Internationale Anmeldenummer: PCT/EP2011/070197
(87) Internationale Veröffentlichungsnummer: WO 2012/079897

(56) Entgegenhaltungen:
- EP-A2- 2 008 886
- WO-A1-2005/080156
- WO-A2-2005/073039
- DE-A1-102004 063 177
- FR-A1- 2 887 830

## Beschreibung

Die vorliegende Erfindung betrifft eine Scheibenwischvorrichtung für ein Kraftfahrzeug, insbesondere eine Heckscheibenwischvorrichtung mit einem Wischermotor, der über eine Befestigungsanordnung an einer Fahrzeugkarosserie des Kraftfahrzeuges befestigbar ist, indem die Befestigungsanordnung mittels eines Montageelementes in mindestens eine in der Fahrzeugkarosserie ausgebildete Aussparung einsetzbar und darin verschiebbar ist, wobei das Montageelement mindestens ein Rastelement aufweist, das in einer Endstellung des Montageelementes eine formschlüssige Verbindung mit der Fahrzeugkarosserie bildet, um den Wischermotor lösbar an der Fahrzeugkarosserie anzubinden.

### Stand der Technik

Derartige Scheibenwischvorrichtungen sind allgemein bekannt und beispielsweise in dem Dokument DE 10 2004 063 177 A1 beschrieben. Dieses Dokument zeigt eine Scheibenwischvorrichtung mit einem Wischermotor und einem zwischen dem Wischermotor und der Fahrzeugkarosserie angeordneten Montageelement. Das Montageelement dient vorliegend dazu, die Befestigung des Wischermotors, welche im Wesentlichen im Stand der Technik über Schrauben erfolgt, deutlich zu vereinfachen, um die Verbindung und deren Montage preiswerter zu gestalten. Dazu ist an dem Montageelement ein Gewinde ausgebildet, durch welches das Montageelement in die Fahrzeugkarosserie einschraubbar ist und über ein Rastelement in der Endstellung des Montageelementes in der Karosserie gehalten wird. Der Aufbau des in diesem Dokument gezeigten Montageelementes ist jedoch sehr aufwendig genauso wie die Vorbereitung der Fahrzeugkarosserie.

Zur Vereinfachung der Montage des Wischermotors an der Fahrzeugkarosserie hat die Anmelderin einen Befestigungsmechanismus entwickelt, bei dem das Montageelement in eine in der Fahrzeugkarosserie ausgebildete Aussparung einsetzbar ist. Zur Fixierung des Montageelementes in einer Endstellung ist im Befestigungsbereich der Karosserie eine Rampe an der Fahrzeugkarosserie ausgebildet, über die das Montageelement geschoben werden muss, bis es mit einem ebenfalls an der Fahrzeugkarosserie ausgebildeten Anschlag zur Anlage kommt und in eine zwischen Rampe und Anschlag gebildete Vertiefung mit an dem Montageelement vorgesehenen Vorsprung eingreift. Die Herstellung der an der Fahrzeugkarosserie auszubildenden Geometrie ist jedoch sehr aufwendig und teuer. Dokument EP 2008 886 A2 offenbart eine Scheibenwischervorrichtung gemäß dem ersten Teil des Anspruchs 1.

Es ist daher Aufgabe der Erfindung, eine Scheibenwischvorrichtung bereitzustellen, die ein noch einfacheres und kostengünstigeres Anbinden des Wischermotors an die Fahrzeugkarosserie ermöglicht.

### Offenbarung der Erfindung

Diese Aufgabe wird erfindungsgemäß dadurch gelöst, dass an dem Montageelement ein Steg vorgesehen ist, der in der Endstellung des Montageelementes in der Aussparung der Fahrzeugkarosserie mit einem an einem Endbereich des Steges ausgebildeten Vorsprung in eine in der Fahrzeugkarosserie beabstandet von der Aussparung eingebrachte Rastöffnung und/oder -vertiefung zumindest teilweise eingreift, wobei der Steg einen zwischen der Aussparung und der Rastöffnung gebildeten Abschnitt der Karosserie hintergreift.

### Vorteile der Erfindung

Mit anderen Worten wird die komplette Haltefunktion für den Wischermotor in das Montageelement integriert und eine besonders einfache Montage des Wischermotors in der Fahrzeugkarosserie ermöglicht. Es ist nicht mehr notwendig, die Karosserie zur Aufnahme eines entsprechenden Montageelementes aufwendig vorzubereiten und entsprechend zu bearbeiten. Stattdessen reicht es, beispielsweise durch einfaches Stanzen eine Aussparung zum Einsetzen des Montageelementes und eine Rastöffnung zur Bereitstellung eines Schnappmechanismusses in die Fahrzeugkarosserie einzubringen. Dies verringert die Herstellungskosten auf Seiten der Fahrzeugkarosserie erheblich.

Zur weiteren Vereinfachung des Aufbaus der Befestigungsanordnung für die Anbindung des Wischermotors an der Fahrzeugkarosserie wird in einem Ausführungsbeispiel vorgeschlagen, das Montageelement als elastisches Entkopplungselement auszubilden, um eventuell auftretende Schwingungen, Geräusche und Relativbewegungen zwischen dem Wischermotor und der Fahrzeugkarosserie zu dämmen. Zusätzliche Entkopplungselemente zwischen dem Montageelement und der Fahrzeugkarosserie bzw. zwischen dem Montageelement und der darin eingesetzten Komponenten der Scheibenwischvorrichtung können somit vollends entfallen.

Dazu kann das Montageelement beispielsweise vollständig aus einem Gummi gebildet sein. Natürlich ist es auch möglich, das Montageelement nur teilweise aus Gummi zu gestalten und beispielsweise den Kern des Montageelementes aus einem Werkstoff auszubilden, der eine höhere Biege- und Torsionssteifigkeit aufweist.

Um auch bei einem Auftreten von Biege- und Torsionsmomenten eine sichere Befestigung des Wischermotors zu gewährleisten, weist das Montageelement eine Härte zwischen 30 Shore A und 95 Shore A, bevorzugt zwischen 70 Shore A und 90 Shore A, noch bevorzugter von 80 Shore A auf. So können auf die Scheibenwischvorrichtung wirkende Kräfte auch über das Montageelement aufgenommen und über die Fahrzeugkarosserie abgeführt werden.

Der an dem Steg ausgebildete Vorsprung kann beispielsweise als Rastnase ausgebildet sein.

Um die Montage des Montageelementes an der Fahrzeugkarosserie zu vereinfachen, ist in einem Ausführungsbeispiel vorgesehen, den Vorsprung als in Einsteckrichtung des Montageelements mit einer Führungsschräge zu versehen.

Hinsichtlich weiterer vorteilhafter Ausgestaltungen der Erfindung wird auf die Unteransprüche sowie die im Folgenden näher beschriebenen Zeichnungen verwiesen.

Kurze Beschreibung der Zeichnungen:
Darin zeigen:
   - Figur 1: eine schematische Darstellung einer Wischermotorschnellbefestigung gemäß dem Stand der Technik; und
   - Figur 2: eine schematische Darstellung einer erfindungsgemäßen Wischermotorschnellbefestigung.

### Ausführungsform der Erfindung

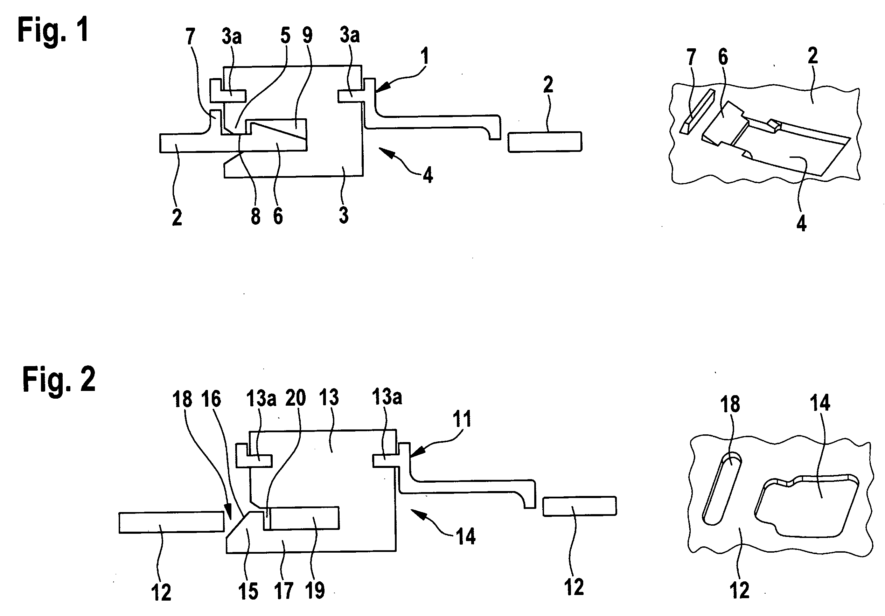

Die Figur 1 zeigt ein Ausführungsbeispiel einer Wischermotorschnellbefestigung gemäß dem Stand der Technik im Teilschnitt.

Zur Befestigung eines nicht dargestellten Wischermotors weist die Scheibenwischvorrichtung eine Befestigungsanordnung 1 auf, über die der Wischermotor an einer Fahrzeugkarosserie 2 des Kraftfahrzeuges befestigt ist. Dazu ist die Befestigungsanordnung 1 mittels eines Montageelementes 3 in eine in der Fahrzeugkarosserie 2 ausgebildete Aussparung 4 eingesetzt und darin verschieblich gehalten. In dem Montageelement 3 sind Vertiefungen 3a ausgebildet, in die der Wischermotor mit dessen Gehäuseabschnitt eingesetzt ist.

An dem Montageelement 3 ist eine Rastnase 5 ausgebildet, welche in einer Endstellung des Montageelementes 3 in der Aussparung 4 der Fahrzeugkarosserie 2 eine formschlüssige Verbindung mit der Fahrzeugkarosserie 2 bildet. Dazu sind in der Fahrzeugkarosserie 2 eine Rampe 6 sowie ein Anschlag 7 ausgebildet.

Das Montageelement 3 wird zur Befestigung des Wischermotors in die Aussparung 4 eingesetzt und über die Rampe 6 entlang der Fahrzeugkarosserie 2 so lang verschoben, bis es mit dem Anschlag 7 in Anlage gelangt. In dieser Endstellung rastet die Rastnase 5 in eine zwischen Rampe 6 und Anschlag 7 gebildete Vertiefung 8 ein und bildet so eine formschlüssige Verbindung mit der Fahrzeugkarosserie 2. In dieser Endstellung wird der Endabschnitt der Fahrzeugkarosserie 2, an dem die Rampe 6 ausgebildet ist, von einem in dem Montageelement 3 ausgebildeten Hohlraum 9 nahezu vollständig umschlossen. Die Herstellung von Anschlag 7 und Rampe 6 an der Fahrzeugkarosserie ist sehr aufwendig und teuer.

In Figur 2 ist eine schematische Darstellung einer erfindungsgemäßen Wischermotorschnellbefestigung gezeigt, die die Bearbeitungs- und Montagekosten aufgrund ihres Aufbaus deutlich verringert.

Auch hier ist eine Teilansicht einer Scheibenwischvorrichtung für ein Kraftfahrzeug gezeigt, in der ein nicht näher dargestellter Wischermotor über eine Befestigungsanordnung 11 an einer Fahrzeugkarosserie 12 des Kraftfahrzeuges befestigt ist, indem die Befestigungsanordnung 11 mittels eines Montageelementes 13 in eine in der Fahrzeugkarosserie 12 ausgebildete Aussparung 14 eingesetzt ist und darin verschieblich gehalten ist. In dem Montageelement 13 sind Vertiefungen 13a ausgebildet, in die der Wischermotor mit dessen Gehäuseabschnitt eingesetzt ist. Das Montageelement 13 ist im vorliegenden Ausführungsbeispiel als elastisches Entkopplungselement ausgebildet, um Schwingungen, Geräusche und Relativbewegungen zwischen dem Wischermotor und der Fahrzeugkarosserie zu dämmen. Dazu ist das Montageelement 13 aus einem Gummi ausgebildet, welches eine Härte vo80 Shore A aufweist. Das Montageelement 13 weist auch hier ein Rastelement 15 auf, das in eine Endstellung des Montageelementes 13 in der Aussparung 14 der Fahrzeugkarosserie einrastet, um eine formschlüssige Verbindung zwischen dem Wischermotor und der Fahrzeugkarosserie 12 zu bilden und den Wischermotor lösbar an der Fahrzeugkarosserie 12 anzubinden. Zur Vereinfachung der Montage ist an der Rastnase 15 in Einsteckrichtung des Montageelementes 13 eine Führungsschräge 16 ausgebildet.

Im Unterschied zu der in Figur 1 gezeigten Wischermotorschnellbefestigung ist an dem erfindungsgemäßen Montageelement 13 hingegen ein Steg 17 vorgesehen, der in der Endstellung des Montageelementes 13 in der Aussparung 14 der Fahrzeugkarosserie 12 in eine in die Fahrzeugkarosserie 12 beabstandet von der Aussparung 14 eingebrachte Rastöffnung 18 mit dem an dem Endbereich des Steges 17 ausgebildeten Vorsprung 15 zumindest teilweise eingreift. Dabei hintergreift der Steg 17 automatisch einen zwischen der Aussparung 14 und der Rastöffnung 18 gebildeten Abschnitt 19 der Fahrzeugkarosserie 12. Auch hier wird der Abschnitt 19 von einem in dem Montageelement 13 ausgebildeten Hohlraum 20 nahezu vollständig umschlossen. Die zur Befestigung des Wischermotors vorzunehmenden Vorbereitungen der Fahrzeugkarosserie 12 bestehen somit ausschließlich darin, eine Aussparung 14 und eine Rastöffnung 18 beispielsweise durch einfaches Stanzen in die Fahrzeugkarosserie 12 einzubringen und anschießend das Montageelement 13 mit dem Steg 17 zu versehen, der so ausgebildet ist, dass dessen Länge im Wesentlichen ein Einschließen des zwischen der Rastöffnung 18 und der Aussparung 14 gebildeten Abschnitts 19 in dem im Montageelement 13 ausgebildeten Hohlraum 20 ermöglicht. Durch einfaches Einsetzen des Steges 17 in die Aussparung 14 und anschließendes Verschieben des Montageelementes 13 in seine Endstellung kann so auf sehr leichte Weise eine formschlüssige Verbindung zwischen dem Montageelement 13 und der Fahrzeugkarosserie 12 erreicht und eine lösbare Anbindung des Wischermotors bereitgestellt werden.

## Patentansprüche

1. Scheibenwischvorrichtung für ein Kraftfahrzeug, insbesondere eine Heckscheibenwischvorrichtung, mit einem Wischermotor, der über eine Befestigungsanordnung (1, 11) an einer Fahrzeugkarosserie (2, 12) des Kraftfahrzeuges befestigbar ist, indem, wobei die Befestigungsanordnung (1, 11) mittels mindestens einem Montageelement (3, 13) in mindestens eine in der Fahrzeugkarosserie (2, 12) ausgebildete Aussparung (4,14) einsetzbar und darin verschiebbar ist, wobei das Montageelement (3,13) mindestens ein Rastelement (5, 15) aufweist, das in einer Endstellung des Montageelementes (3, 13) eine formschlüssige Verbindung mit der Fahrzeugkarosserie (2, 12) bildet, um den Wischermotor lösbar an der Fahrzeugkarosserie (2, 12) anzubinden, **dadurch gekennzeichnet, dass** an dem Montageelement (13) ein Steg (17) vorgesehen ist, der in der Endstellung des Montageelementes (13) in der Aussparung (14) der Fahrzeugkarosserie (12) mit einem an einem Endbereich des Steges (16) ausgebildeten Vorsprung (15) in eine in die Fahrzeugkarosserie (12) beabstandet von der Aussparung (14) eingebrachte Rastöffnung und/oder -vertiefung (18) zumindest teilweise eingreift, wobei der Steg (17) einen zwischen der Aussparung (14) und der Rastöffnung (18) gebildeten Abschnitt (19) der Fahrzeugkarosserie (12) hintergreift.

2. Scheibenwischvorrichtung nach Anspruch 1, **dadurch gekennzeichnet, dass** das Montageelement (13) als elastisches Entkopplungselement ausgebildet ist, um Schwingungen, Geräusche und Relativbewegungen zwischen dem Wischermotor und der Fahrzeugkarosserie (12) zu dämmen.

3. Scheibenwischvorrichtung nach Anspruch 1 oder 2, **dadurch gekennzeichnet, dass** das Montageelement (13) aus einem Gummi gebildet ist.

4. Scheibenwischvorrichtung nach einem der Ansprüche 1 bis 3, **dadurch gekennzeichnet, dass** das Montageelement (13) eine Härte zwischen 30 Shore A und 95 Shore A, bevorzugt zwischen 70 Shore A und 90 Shore A, noch bevorzugter von 80 Shore A aufweist.

5. Scheibenwischvorrichtung nach einem der vorhergehenden Ansprüche, **dadurch gekennzeichnet, dass** der Vorsprung (15) als Rastnase ausgebildet ist.

6. Scheibenwischvorrichtung nach einem der vorhergehenden Ansprüche, **dadurch gekennzeichnet, dass** an dem Vorsprung (15) in Einsteckrichtung des Montageelements (13) eine Führungsschräge (16) ausgebildet ist.

## Claims

1. Windscreen wiper device for a motor vehicle, in particular a rear window wiper device, with a wiper motor which is fastenable to a vehicle body (2, 12) of the motor vehicle via a fastening arrangement (1, 11) by wherein the fastening arrangement (1, 11) being insertable by means of at least one mounting element (3, 13) into at least one recess (4, 14), which is formed in the vehicle body (2, 12), and being displaceable in said recess, wherein the mounting element (3, 13) has at least one latching element (5, 15) which, in an end position of the mounting element (3, 13), forms a form-fitting connection to the vehicle body (2, 12) in order to connect the wiper motor releasably to the vehicle body (2, 12), **characterized in that** a web (17) is provided on the mounting element (13), which web, in the end position of the mounting element (13) in the recess (14) of the vehicle body (12), at least partially engages by means of a projection (15) formed on an end region of the web (16) in a latching opening and/or latching depression (18) introduced into the vehicle body (12) at a distance from the recess (14), wherein the web (17) engages behind a portion (19) of the vehicle body (12) formed between the recess (14) and the latching opening (18).

2. Windscreen wiper device according to Claim 1, **characterized in that** the mounting element (13) is designed as an elastic decoupling element in order to absorb vibrations, noises and relative movements between the wiper motor and the vehicle body (12).

3. Windscreen wiper device according to Claim 1 or 2, **characterized in that** the mounting element (13) is formed from a rubber.

4. Windscreen wiper device according to one of Claims 1 to 3, **characterized in that** the mounting element (13) has a hardness of between 30 Shore A and 95 Shore A, preferably between 70 Shore A and 90 Shore A, even more preferably of 80 Shore A.

5. Windscreen wiper device according to one of the preceding claims, **characterized in that** the projection (15) is designed as a latching lug.

6. Windscreen wiper device according to one of the preceding claims, **characterized in that** a guide slope (16) is formed on the projection (15) in the insertion direction of the mounting element (13).

## Revendications

1. Dispositif d'essuie-glace pour un véhicule automobile, en particulier un dispositif d'essuie-glace arrière, comprenant un moteur d'essuie-glace qui peut être fixé par le biais de l'agencement de fixation (1, 11) à une carrosserie de véhicule (2, 12) du véhicule automobile, par l'agencement de fixation (1, 11) pouvant être inséré au moyen d'au moins un élément de montage (3, 13) dans au moins un évidement (4, 14) réalisé dans la carrosserie du véhicule (2, 12) et pouvant être glissé dans celui-ci, l'élément de montage (3, 13) présentant au moins un élément d'encliquetage (5, 15), lequel forme, dans une position d'extrémité de l'élément de montage (3, 13), une connexion par engagement par correspondance de formes avec la carrosserie du véhicule (2, 12), afin de raccorder de manière amovible le moteur d'essuie-glace à la carrosserie du véhicule (2, 12), **caractérisé en ce que** sur l'élément de montage (13) est prévue une nervure (17) qui, dans la position d'extrémité de l'élément de montage (13), s'engage au moins en partie dans l'évidement (14) de la carrosserie du véhicule (12) avec une saillie (15) réalisée au niveau d'une région d'extrémité de la nervure (16) dans une ouverture et/ou un renfoncement d'encliquetage (18) pratiqué(e) dans la carrosserie du véhicule (12) à distance de l'évidement (14), la nervure (17) s'engageant par l'arrière avec une partie (19) de la carrosserie du véhicule (12) formée entre l'évidement (14) et l'ouverture d'encliquetage (18).

2. Dispositif d'essuie-glace selon la revendication 1, **caractérisé en ce que** l'élément de montage (13) est réalisé sous forme d'élément de désaccouplement élastique afin d'amortir des oscillations, des bruits et des mouvements relatifs entre le moteur d'essuie-glace et la carrosserie du véhicule (12).

3. Dispositif d'essuie-glace selon la revendication 1 ou 2, **caractérisé en ce que** l'élément de montage (13) est formé de caoutchouc.

4. Dispositif d'essuie-glace selon l'une quelconque des revendications 1 à 3, **caractérisé en ce que** l'élément de montage (13) présente une dureté comprise entre 30 Shore A et 95 Shore A, de préférence entre 70 Shore A et 90 Shore A, encore plus préférablement de 80 Shore A.

5. Dispositif d'essuie-glace selon l'une quelconque des revendications précédentes, **caractérisé en ce que** la saillie (15) est réalisée sous forme de nez d'encliquetage.

6. Dispositif d'essuie-glace selon l'une quelconque des revendications précédentes, **caractérisé en ce qu'**un biseau de guidage (16) est réalisé au niveau de la saillie (15) dans la direction d'affichage de l'élément de montage (13).
